# EUROPEAN PATENT APPLICATION

(11) **EP 2 124 490 A2**
(43) Date of publication of application: **25.11.2009**
(21) Application number: 09155981.5
(22) Date of filing: 24.03.2009
(51) Int. Cl.: H04W 4/02

(54) **Mobile terminal and method of managing meeting information using the same**

(30) Priority: 23.05.2008 KR 20080048057
(71) Applicant: Samsung Electronics Co., Ltd., Suwon-si, Gyeonggi-do (KR)
(72) Inventor: Kim, Hyun Kyoung, Gyeonggi-do (KR); Shin, Dong Jun, Gyeonggi-do (KR); Kim, Kyoung Taek, Gyeonggi-do (KR); Kim, Hyang Ah, Gyeonggi-do (KR); Kim, Jin Yong, Gyeonggi-do (KR)
(74) Representative: Harrison Goddard Foote

(57) **Abstract**

A mobile terminal and a method of managing meeting information using the same are provided. The method of managing meeting information using a first mobile terminal includes acquiring meeting information including identification data of at least one location data sharing mobile terminal existing within a meeting distance from the present location of the first mobile terminal in response to a request to acquire meeting information, and displaying the meeting information in response to a request to search the meeting information.

## Description

### BACKGROUND OF THE INVENTION

### FIELD OF THE INVENTION

The present invention relates to a mobile terminal and a method of managing meeting information using the same, and more particularly, to a mobile terminal and a method of managing meeting information using the same that can determine a present location.

### DISCUSSION OF THE BACKGROUND

In general, mobile terminals have various functions in addition to a communication function, and the performance of such functions by the mobile terminal may be increasingly complex. Nowadays, mobile terminals provide various convenience functions such as a message transmission and reception function, a wireless Internet function, a phonebook management function, a schedule management function, a memo management function, and a navigation function in addition to a communication function. Accordingly, a mobile terminal should be capable of acquiring and managing a large quantity of information in various data formats generated through such complex functions.

In order for the mobile terminal to acquire information, a user of the mobile terminal may need to repeat key selection to generate information multiple times according to a data format. Further, because the mobile terminal does not acquire generated information systemically, stored information corresponding to a specific category may be difficult to retrieve. Therefore, it may not be easy for the mobile terminal to acquire and manage various pieces of information.

### SUMMARY OF THE INVENTION

The present invention provides a mobile terminal and a method of managing information using the same that may determine a present location.

Additional features of the invention will be set forth in the description which follows, and in part will be apparent from the description, or may be learned by practice of the invention.

The present invention discloses a method of managing meeting information using a first mobile terminal including acquiring meeting information including identification data of at least one location data sharing mobile terminal existing within a meeting distance from the present location of the mobile terminal in response to a request to acquire the meeting information, and displaying the meeting information in response to a request to search the meeting information.

The present invention also discloses a mobile terminal including a controller and a display unit. The controller acquires meeting information including identification data of at least one location data sharing mobile terminal existing within a meeting distance from the present location of the mobile terminal in response to a request to acquire the meeting information, and searches for the meeting information. The display unit displays the meeting information searched for by the controller.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram showing a configuration of a mobile terminal according to an exemplary embodiment of the present invention.

FIG. 2 is a flowchart showing a method of managing meeting information using a mobile terminal according to another exemplary embodiment.

FIG. 3 is a flowchart showing a process of acquiring meeting information in the method of FIG. 2.

FIG. 4 is a flowchart showing a process of searching for meeting information in the method of FIG. 2.

FIG. 5A, FIG. 5B, FIG. 5C, FIG. 5D, FIG. 5E, FIG. 5F, FIG. 5G, FIG. 5H, FIG. 5I, and FIG. 5J show screens displayed when performing the method of FIG. 2.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

In the following description, 'location data' indicates coordinate data of a specific location. The location data may include a longitude, a latitude, and an altitude of a corresponding location.

'Location data sharing mobile terminal' indicates a mobile terminal for sharing location data. A mobile terminal of exemplary embodiments of the present invention (hereinafter, a 'user mobile terminal') may previously register a location data sharing mobile terminal with approval of a user of the location data sharing mobile terminal.

'Identification data' indicates data individually allocated to a location data sharing mobile terminal and the user mobile terminal for identification thereof. The identification data may include code data. The user mobile terminal may register the identification data of the location data sharing mobile terminal. For example, the user mobile terminal may register the identification data of the location data sharing mobile terminal using previously stored identification data through a phonebook management function. In this case, the identification data may further include, for example, name data including characters or symbols, or image data of the user of the location data sharing mobile terminal, provided to correspond to each code data of the user mobile terminal.

'Time data' indicates data of a specific time point. The time data includes a date and time of the specific time point. The time data may further include a day of the specific time point.

'Meeting information' indicates data about a meeting, for example a specific gathering, assembly, conference, or contest, which may be acquired by the user mobile terminal. For example, the meeting information may include a recording of a meeting that the user of the mobile terminal attends. The meeting information may include a meeting location, an attending person, and a meeting time. In this case, the meeting location is obtained from location data of the user mobile terminal. An attending person may be a user of a location data sharing mobile terminal.

'Meeting distance' indicates a distance from a mobile terminal that defines a range within which location information of other mobile terminals may be acquired. In this case, the meeting distance may be preset to the mobile terminal.

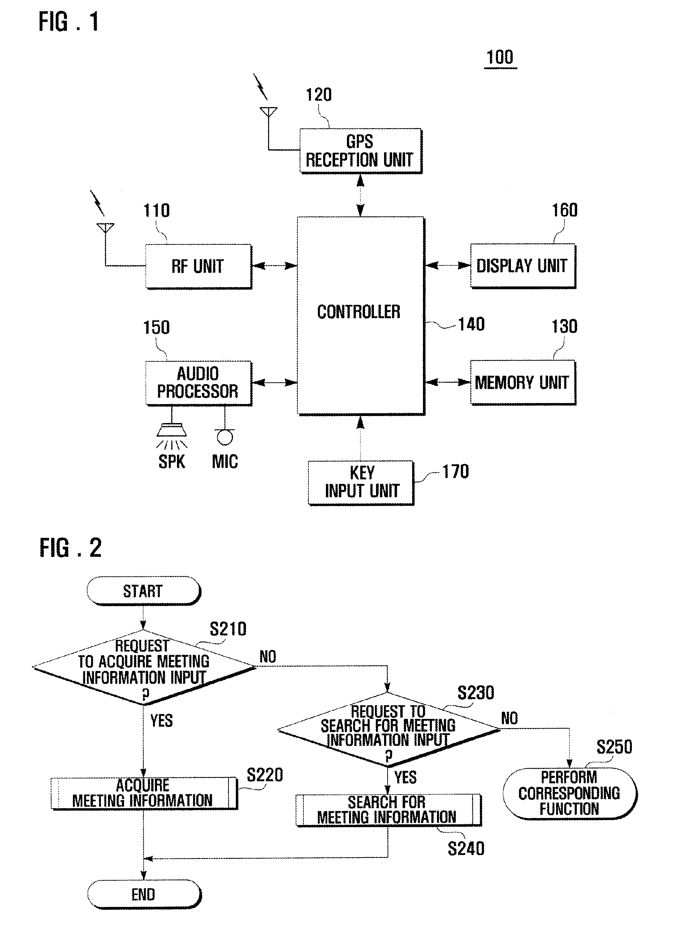

FIG. 1 is a block diagram showing a configuration of a mobile terminal according to an exemplary embodiment of the present invention.

In the exemplary embodiment, the mobile terminal is a mobile phone.

Referring to FIG. 1, a mobile terminal 100 according to the present exemplary embodiment includes a radio frequency (RF) unit 110, a global positioning system (GPS) reception unit 120, a memory unit 130, a controller 140, an audio processor 150, a display unit 160, and a key input unit 170.

The RF unit 110 performs a wireless communication function of the mobile terminal 100. The RF unit 110 includes an RF transmitter to up-convert a frequency of a signal to be transmitted and amplify the signal, and an RF receiver to low-noise amplify a received signal and down-convert a frequency of the signal.

The GPS reception unit 120 performs a function of receiving GPS data. The GPS reception unit 120 receives GPS data from a GPS satellite (not shown) or a position determination server (not shown). In this case, the GPS data may include an ephemeris, an almanac, and a time of the GPS satellite.

The memory unit 130 may include a program memory and a data memory. The program memory stores programs to control general operations of the mobile terminal 100. In the exemplary embodiment, the program memory stores programs to manage meeting information. The data memory stores data generated while executing programs. The memory unit 130 stores a meeting distance and a plurality of meeting information that are set in the present exemplary embodiment of the present invention. Further, the memory unit 130 stores identification data of at least one location data sharing mobile terminal.

The controller 140 controls general operations of the mobile terminal 100. The controller 140 includes a data processor having a transmitter to encode and modulate a signal to be transmitted and a receiver to decode and demodulate a received signal. The data processor includes a modem and a codec. The codec includes a data codec to process packet data and an audio codec to process an audio signal such as a voice. The controller 140 determines location information of the mobile terminal 100 using GPS data. The location information includes location data of a present location and time data of a present time point. When acquiring meeting information according to the present exemplary embodiment, the controller 140 acquires meeting information including identification data of at least one location data sharing mobile terminal existing within a meeting distance from a present location. That is, the controller 140 determines and stores meeting information. Further, when searching for the meeting information, the controller 140 controls the display unit 160 to display the meeting information. In this case, the controller 140 may arrange and display previously stored meeting information according to at least one arrangement condition, or may transmit the meeting information.

The audio processor 150 reproduces an audio signal output from the audio codec of the data processor through a speaker SPK, and transmits an audio signal input through a microphone MIC to the audio codec of the data processor.

The display unit 160 displays user data output from the controller 140. The display unit 160 can use a liquid crystal display (LCD), and when the display unit 160 uses an LCD, the display unit 160 includes an LCD controller, a memory to store image data, and an LCD display element. The LCD may be a touch screen, and can then be used as an input unit.

The key input unit 170 includes keys to input numeral and character information and function keys to set various functions. The key input unit 170 may have a specific key to acquire meeting information of a present location, for example, a 'Here' key.

FIG. 2 is a flowchart showing a method of managing meeting information using the mobile terminal 100 according to another exemplary embodiment.

Referring to FIG. 2, the controller 140 determines whether a request to acquire meeting information is input (S210).

If a request to acquire meeting information is input, the controller 140 acquires the meeting information (S220). For example, when a 'Here' key is selected from the key input unit 170, the controller 140 identifies the selection of the 'Here' key as a request to acquire the meeting information. Alternatively, when a menu option to acquire the meeting information is selected from a displayed menu, the controller 140 determines the selection of the menu option as a request to acquire the meeting information. The controller 140 acquires meeting information including identification data of at least one location data sharing mobile terminal existing within a meeting distance from a present location.

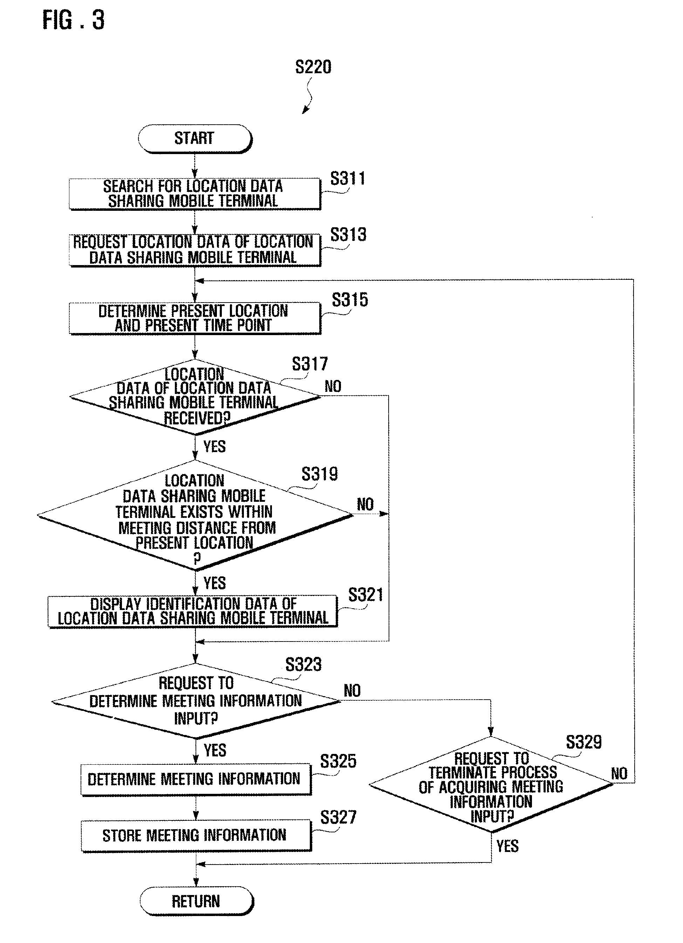

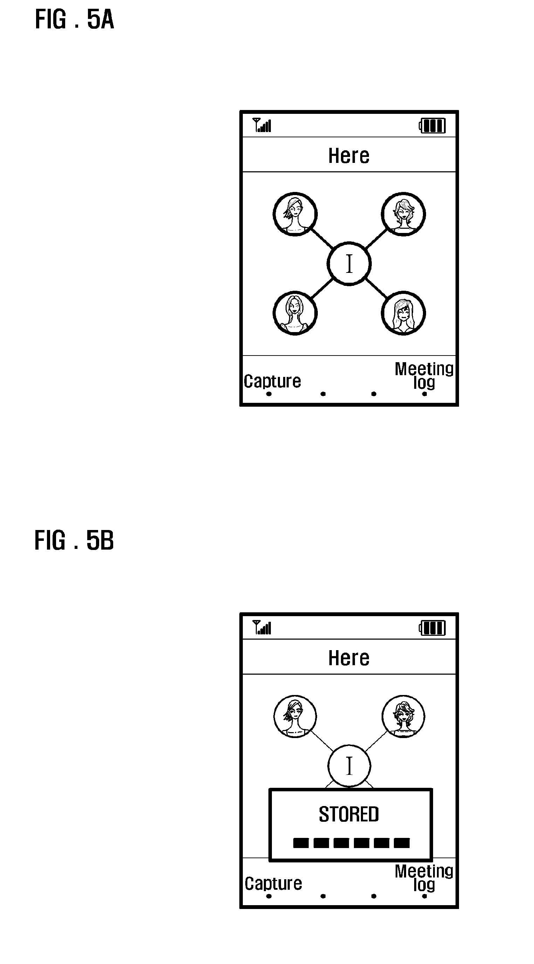

FIG. 3 is a flowchart showing a process of acquiring meeting information of step S220 in the method of FIG. 2. FIG. 5A shows an example of a screen displayed when determining meeting information, and FIG. 5B shows an example of a screen displayed when storing the meeting information.

Referring to FIG. 3, to acquire meeting information, the controller 140 first searches for location data sharing mobile terminals (S311). That is, the controller 140 searches the memory unit 130 for identification data of location data sharing mobile terminals.

The controller 140 requests location data of the location data sharing mobile terminal (S313). That is, the controller 140 requests location data of each location data sharing mobile terminal having identification data stored in the memory unit 130. The controller 140 may request location data from each location data sharing mobile terminal or, when location data of location data sharing mobile terminals are registered in a server (not shown), the controller 140 may request location data of each location data sharing mobile terminal from the server.

The controller 140 determines the present location of the mobile terminal 100 and the present time point (S315). That is, the controller 140 determines location information using GPS data, and determines location data of the present location and time data of the present time point from the location information.

The controller 140 determines whether the location data of the location data sharing mobile terminal are received (S317). If the location data of the location data sharing mobile terminal are received, the controller 140 determines whether the location data sharing mobile terminal exists within a meeting distance from the present location of the mobile terminal 100 (S319). That is, the controller 140 calculates the distance from the present location to the location of the location data sharing mobile terminal by comparing the location data of the present location and the location data of the location data sharing mobile terminal, and determines whether the location data sharing mobile terminal exists within a meeting distance from the present location by determining whether the calculated distance is less than the meeting distance.

If the location data sharing mobile terminal exists within a meeting distance from the present location, the controller 140 controls the display unit 160 to display identification data of the location data sharing mobile terminal (S321), as shown in FIG. 5A. The controller 140 controls the display unit 160 to display at least one form of identification data, for example name data or image data, of the location data sharing mobile terminals existing within the meeting distance from the present location.

The controller 140 determines whether a request to determine meeting information is input (S323). If a request to determine meeting information is input, the controller 140 determines meeting information (S325). That is, the controller 140 determines a meeting location, attending persons, and a meeting time point. Alternatively, the controller 140 may use the stored information through various functions added to the mobile terminal 100. The controller 140 may determine a meeting location using location data of the present location. For example, if map data including a location name, a firm name, and a building name corresponding to the present location data are stored in the memory unit 130, the controller 140 determines the present location as a meeting location using the map data. Alternatively, if map data including a location name, firm name, and building name corresponding to the present location data are registered in the server (not shown), the controller 140 determines the present location as the meeting location through the server. The controller 140 determines attending persons using the identification data of the location data sharing mobile terminals existing within the meeting distance from the present location. If the identification data of the location data sharing mobile terminals were previously registered through a phonebook management function, the controller 140 determines a group of attending persons corresponding to the identification data of the location data sharing mobile terminals belongs using a phonebook management function. Further, the controller 140 determines a meeting time point using time data of the mobile terminal.

The controller 140 stores the meeting information (S327), as shown in FIG. 5B, and the process returns to FIG. 2, whereupon the method of managing meeting information is terminated.

If a request to determine meeting information is not input at step S323, the controller 140 determines whether a request to terminate the process of acquiring the meeting information is input (S329).

If a request to terminate the process of acquiring the meeting information is input, the controller 140 terminates the process of acquiring the meeting information, and the process returns to FIG. 2, whereupon the method of managing meeting information is terminated. That is, the controller 140 terminates the process of acquiring the meeting information of step S220 without storing the meeting information.

If a request to terminate the process of acquiring the meeting information is not input at step S329, the process returns to step S315 and the controller 140 continues to determine the present location and present time point.

Returning to FIG. 2, if a request to acquire meeting information is not input at step S210, the controller 140 determines whether a request to search for meeting information is input (S230).

If a request to search for meeting information is input, the controller 140 searches for meeting information (S240). For example, the controller 140 controls the display unit 160 to display previously stored meeting information.

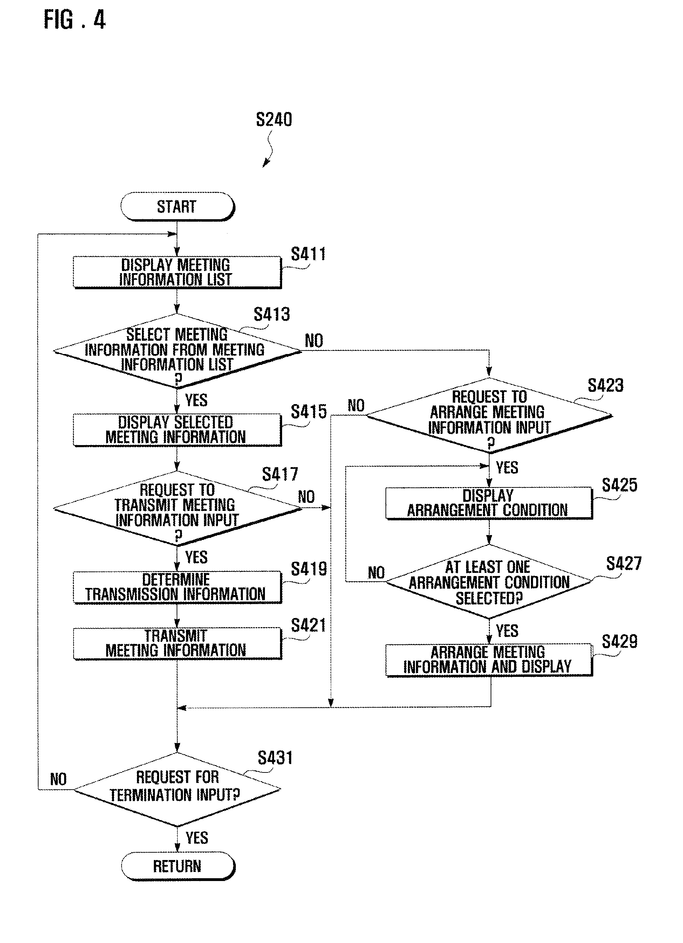

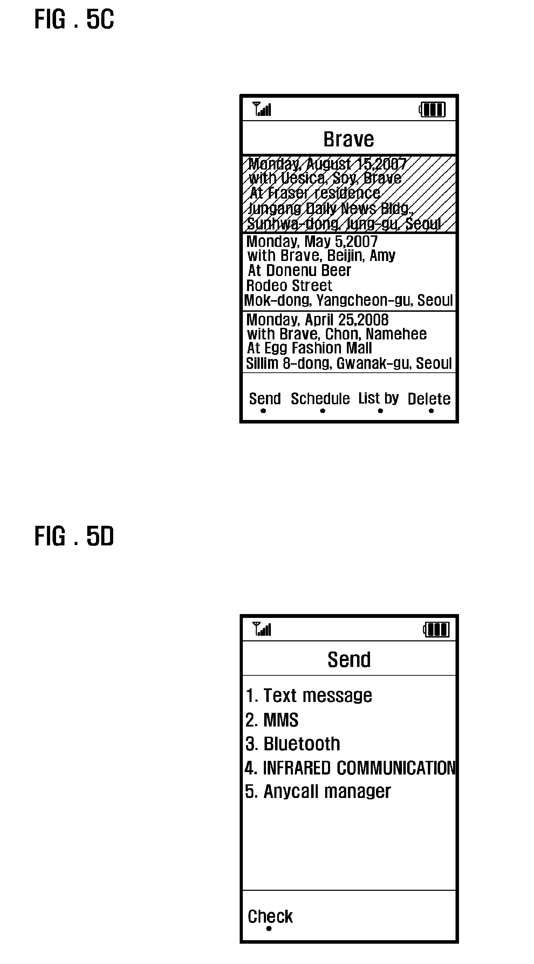

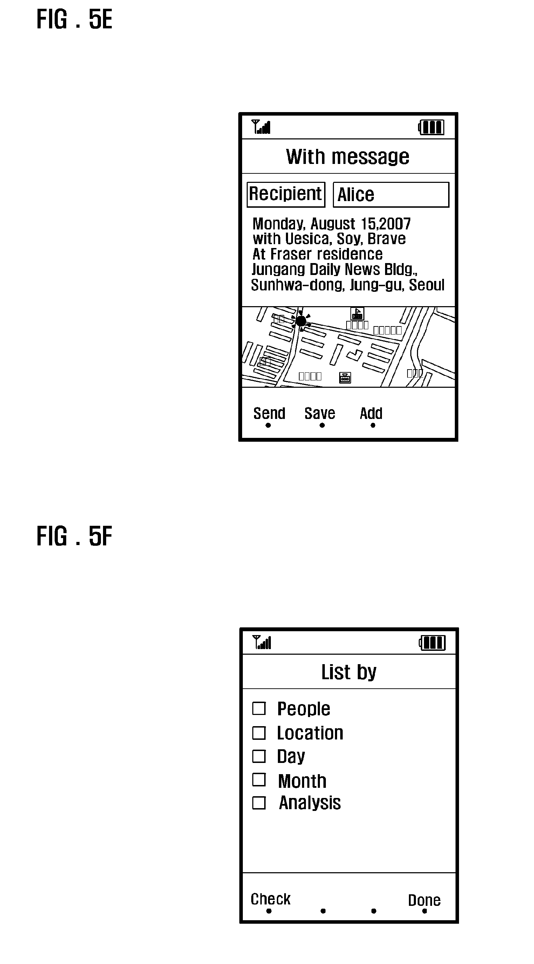

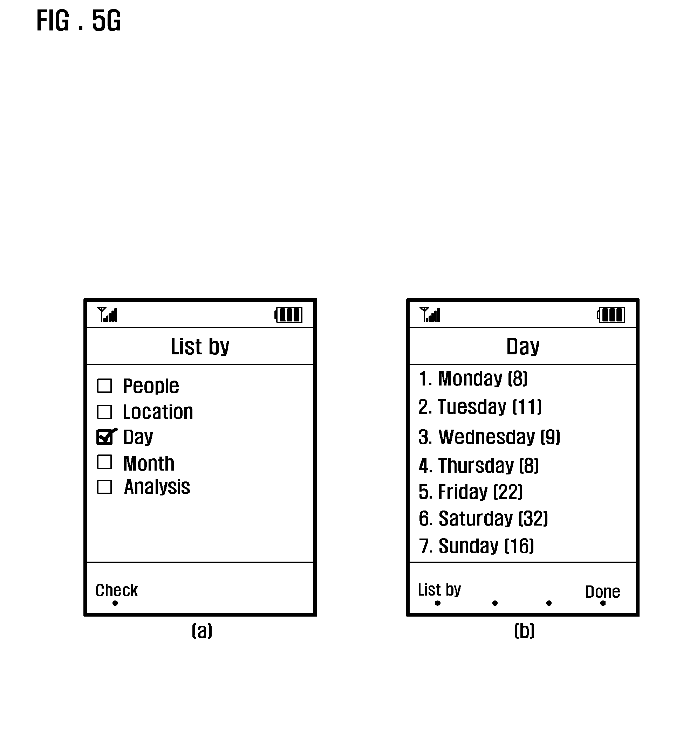

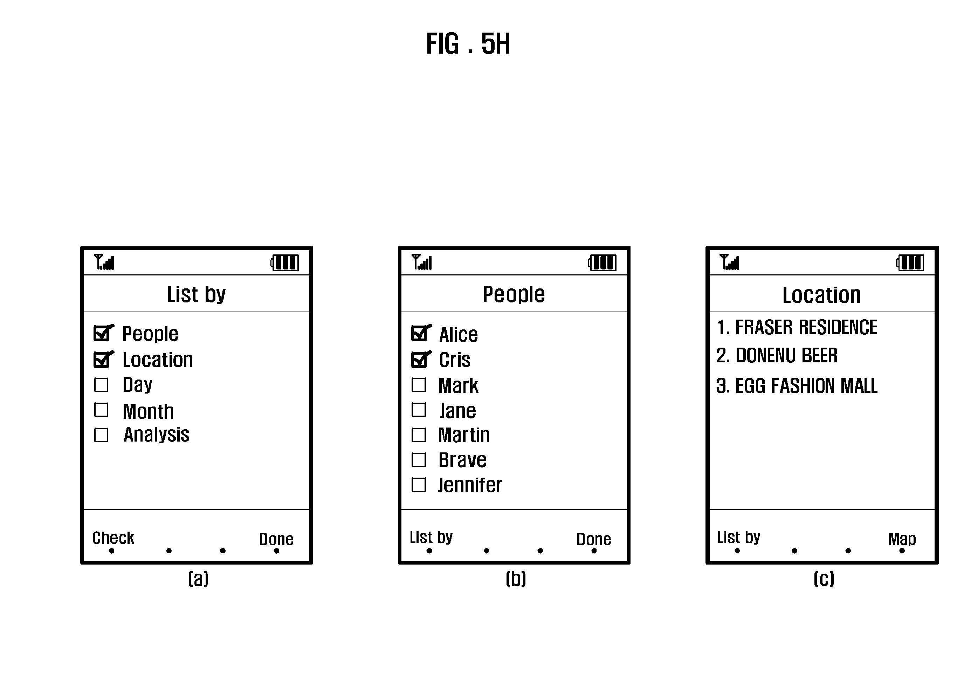

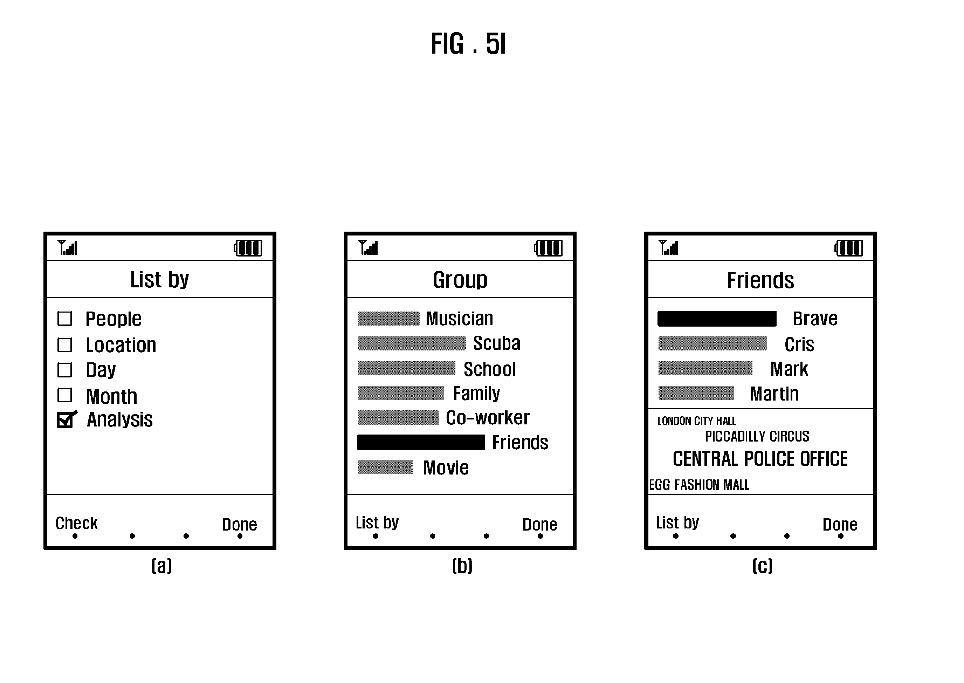

FIG. 4 is a flowchart showing a process of searching for meeting information of step S240 in the method of FIG. 2. FIG. 5C shows a screen displaying a meeting information list, FIG. 5D and FIG. 5E show screens displayed when transmitting the meeting information, and FIG. 5F, FIG. 5G, FIG. 5H, and FIG. 5I show screens displayed when arranging the meeting information.

Referring to FIG. 4, to search for meeting information, firstly the controller 140 controls the display unit 160 to display a meeting information list (S411), as shown in FIG. 5C. That is, the controller 140 controls the display unit 160 to display a meeting information list including at least a portion of meeting information of each of a plurality of meetings having meeting information stored in the memory unit 130.

The controller 140 determines whether meeting information is selected from the meeting information list (S413). If meeting information is selected from the meeting information list, the controller 140 controls the display unit 160 to display the selected meeting information (S415). For example, the controller 140 may control the display unit 160 to display selected detailed information such as a phone number, a homepage address, a preference degree, and a surrounding outline map of a meeting location, or detailed information such as identification data and an intimacy degree of an attending person, from among the meeting information.

The controller 140 determines whether a request to transmit the meeting information is input (S417). If a request to transmit the meeting information is input, the controller 140 determines transmission information corresponding to the selected meeting information (S419), as shown in FIG. 5D and FIG. 5E. The transmission information is basic information required for the controller 140 to transmit the meeting information. For example, the controller 140 may select a transmission method to transmit the meeting information, as shown in FIG. 5D, and may select identification data of another party's mobile terminal (not shown), as shown in FIG. 5E. The transmission method to transmit the meeting information may include, for example, a short message service (SMS), a multimedia message service (MMS), Bluetooth®, infrared communication, and e-mail.

The controller 140 transmits the meeting information according to the determined transmission information (S421).

If meeting information is not selected from the meeting information list at step S413, the controller 140 determines whether a request to arrange the meeting information is input (S423).

If a request to arrange the meeting information is input, the controller 140 controls the display unit 160 to display an arrangement condition (S425), as shown in FIG. 5F. The arrangement condition is a condition by which the controller 140 forms groups of meeting information for a plurality of meetings stored in the memory unit 130.

The controller 140 determines whether at least one arrangement condition is selected (S427), as shown in FIG. 5G, FIG. 5H, and FIG. 5I.

If at least one arrangement condition is selected, the controller 140 arranges the meeting information according to the selected arrangement condition and displays the arranged meeting information (S429).

That is, the controller 140 arranges a plurality of meeting information in groups according to the selected arrangement condition, and extracts and displays meeting information of a specific group. The controller 140 arranges the meeting information in groups according to at least one of identification data, location data, and time data of the meeting information of each meeting. If a plurality of arrangement conditions are selected, the controller 140 may sequentially arrange a plurality of meeting information in groups. Further, when arranging the meeting information, the controller 140 controls the display unit 160 to display groups of the meeting information in a list and then displays the meeting information of a group selected from the list. In this case, when displaying the group, the controller 140 controls the display unit 160 to display a generating frequency of meeting information corresponding to each group with numerals or graphs, thereby providing a preference on a meeting location basis, on a meeting time basis, and on a basis of an intimacy of an attending person.

For example, if 'Day' is selected as a first arrangement condition, as shown in (a) of FIG. 5G, the controller 140 arranges meeting information for a plurality of meetings in groups on a day basis, and may sequentially arrange the meeting information, or may control the display unit 160 to display days in a list, as shown in (b) of FIG. 5G. If 'Monday' is then selected from the list of days as a second arrangement condition, the controller 140 arranges the meeting information of 'Monday'.

If 'People' and 'Location' are selected as a first arrangement condition, as shown in (a) of FIG. 5H, the controller 140 may arrange meeting information for a plurality of meetings in groups on a people basis and control the display unit 160 to display people in a list, as shown in (b) of FIG. 5H. If 'Alice' and 'Cris' are then selected from the list of people as a second arrangement condition, the controller 140 arranges information about a meeting with 'Alice' and 'Cris' in groups on a location basis and controls the display unit 160 to display locations in a list, as shown in (c) of FIG. 5H. Further, if 'Egg Fashion Mall' is then selected from the location list as a third arrangement condition, the controller 140 arranges information about a meeting with 'Alice' and 'Cris' at 'Egg Fashion Mall'.

Alternatively, if 'People' and 'Location' are selected as a first arrangement condition, as shown in (a) of FIG. 5H, the controller 140 may arrange a plurality of meeting information in groups on a location basis and control the display unit 160 to display locations in a list, as shown in (c) of FIG. 5H. If 'Egg Fashion Mall' is then selected from the location list as a second arrangement condition, the controller 140 arranges information about a meeting at 'Egg Fashion Mall' in groups on a people basis, and controls the display unit 160 to display people in a list, as shown in (b) of FIG. 5H. Further, if 'Alice' and 'Cris' are then selected from the list of people as a third arrangement condition, the controller 140 arranges information about a meeting with 'Alice' and 'Cris' at 'Egg Fashion Mall'.

If 'Analysis' is selected as an arrangement condition, as shown in (a) of FIG. 5I, the controller 140 arranges a plurality of meeting information in groups of people and controls the display unit 160 to display groups of people in a list, as shown in (b) of FIG. 5I. If 'Friend' is then selected from the list of groups of people a second arrangement condition, the controller 140 determines locations from meeting information including people corresponding to 'Friend' and controls the display unit 160 to display a list of people corresponding to 'Friend' and a list of the determined locations, as shown in (c) of FIG. 5I.

After transmitting meeting information at step S421 or arranging meeting information at step S429, or if no request to arrange meeting information is input at step S423, the controller 140 determines whether a request for termination is input (S431).

If a request for termination is input, the controller 140 terminates the process of searching for meeting information, and the process returns to FIG. 2, whereupon the method of managing meeting information is terminated. If a request for termination is not input, the process returns to step 411 and the controller 140 controls the display unit 160 to display a meeting information list.

Returning to FIG. 2, if a request to search for the meeting information is not input at step S230, the controller 140 performs a corresponding function (S250). For example, when a specific time has elapsed from an acquisition time point of each meeting information, the controller 140 may delete the corresponding meeting information from the memory unit 130. Further, the controller 140 may edit at least a part of a plurality of meeting information stored in the memory unit 130.

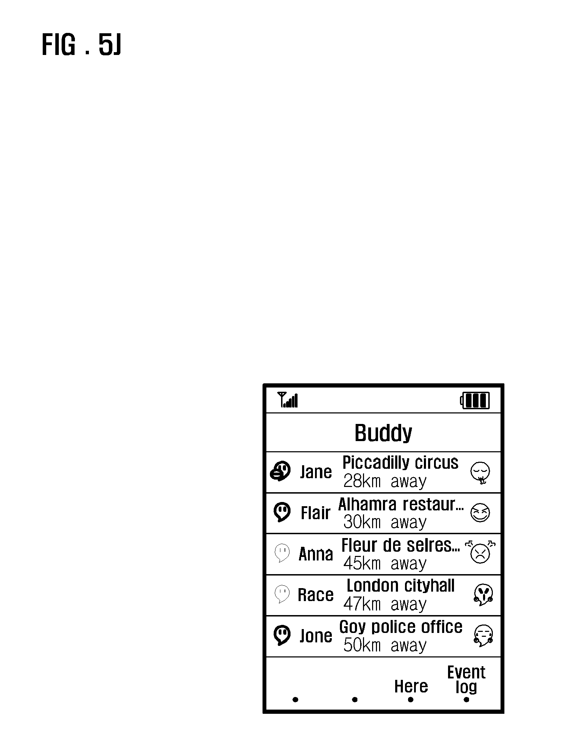

In the method of managing meeting information according to the present exemplary embodiment, the meeting information is first acquired, then the controller 140 determines locations of location data sharing mobile terminals; however the present invention is not limited thereto. That is, the controller 140 may determine locations of location data sharing mobile terminals before acquiring meeting information. For example, the controller 140 may determine locations of location data sharing mobile terminals by receiving location data of location data sharing mobile terminals in a specific time interval. The controller 140 controls the display unit 160 to display the locations of the location data sharing mobile terminals, as shown in FIG. 5J. Thereafter, when meeting information is acquired, the controller 140 controls the display unit 160 to display location data sharing mobile terminals existing within a meeting distance from the present location of the mobile terminal 100, as shown in FIG. 5A. In this case, the controller 140 may determine the present location of location data sharing mobile terminals before acquiring meeting information, and then determine the present location when acquiring meeting information.

In the method of managing meeting information according to the present exemplary embodiment, when storing the meeting information, the controller 140 first determines the meeting information and then stores the meeting information; however the present invention is not limited thereto. That is, the controller 140 may determine meeting information and then control the display unit 160 to display the meeting information. For example, if a location data sharing mobile terminal exists within a meeting distance from the present location of the mobile terminal 100, the controller 140 determines the meeting information and controls the display unit 160 to display the determined meeting information. Thereafter, when a request to store the meeting information is input, the controller 140 stores the displayed meeting information.

In the method of managing meeting information according to the present exemplary embodiment, when storing meeting information, the controller 140 stores the meeting information only when a request to store the meeting information is input, however the present invention is not limited thereto. That is, even if a separate request to store meeting information is not input, the controller 140 may automatically store the meeting information. For example, if a location data sharing mobile terminal exists within a meeting distance from a present location, the controller 140 determines the meeting information and then automatically stores the determined meeting information.

In the present exemplary embodiment, the mobile terminal 100 has a GPS reception unit 120 and determines its present location and a present time point using GPS data received through the GPS reception unit 120; however the present invention is not limited thereto. That is, even if the mobile terminal 100 has no GPS reception unit 120, the present invention may be embodied. For example, the mobile terminal 100 may receive location data from a base station through an RF unit 110 and determine the present location from the location data.

As described above, according to exemplary embodiments of the present invention, the mobile terminal may acquire meeting information according to a data format without requiring a user of a mobile terminal to repeat key selection multiple times, thereby improving user convenience. Further, accuracy of meeting information corresponding to the data format may be improved and thus the user may easily acquire and manage the meeting information using the mobile terminal.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method of managing meeting information using a first mobile terminal, comprising:
acquiring meeting information comprising identification data of at least one location data sharing mobile terminal existing within a meeting distance from a present location of the first mobile terminal in response to a request to acquire the meeting information; and
displaying the meeting information in response to a request to search the meeting information.

2. The method of claim 1, wherein the meeting information further comprises location data of the present location of the location data sharing mobile terminal, and time data of a time point at which a request for to acquire meeting information is input.

3. The method of claim 1 or 2, wherein acquiring the meeting information comprises:
determining whether the location data sharing mobile terminal exists within a meeting distance from the present location of the first mobile terminal using the received location data in response to receipt of the location data of the location data sharing mobile terminal; and
displaying the identification data of the location data sharing mobile terminal when the location data sharing mobile terminal exists within the meeting distance.

4. The method of any one of claims 1 to 3, wherein acquiring meeting information comprises:
determining meeting information; and
storing the determined meeting information.

5. The method of any one of claims 1 to 4, wherein displaying meeting information further comprises:
displaying at least one arrangement condition to arrange the meeting information; and
arranging the meeting information according to a selected arrangement condition in response to selection of the at least one arrangement condition.

6. The method of claim 5, wherein arranging the meeting information comprises arranging the meeting information in a group according to at least one of identification data, location data, and time data.

7. The method of any one of claims 1 to 6, further comprising transmitting the displayed meeting information to a second mobile terminal in response to a request to transmit the meeting information.

8. A mobile terminal, comprising:
a controller to acquire meeting information in response to a request to acquire meeting information, the meeting information comprising identification data of at least one location data sharing mobile terminal existing within a meeting distance from a present location of the mobile terminal, and to search for the meeting information; and
a display unit to display the meeting information searched for by the controller.

9. The mobile terminal of claim 8, wherein the meeting information comprises location data of the present location of the at least one location data sharing mobile terminal, and time data of the present time point.

10. The mobile terminal of claim 8 or 9, further comprising a radio frequency (RF) unit to transmit the meeting information.

11. The mobile terminal of any one of claims 8 to 10, wherein the controller determines whether the location data sharing mobile terminal exists within the meeting distance from the present location of the first mobile terminal using the received location data in response to receipt of the location data of the location data sharing mobile terminal, and controls the display unit to display the identification data of the location data sharing mobile terminal when the location data sharing mobile terminal exists within the meeting distance from the present location of the mobile terminal.

12. The mobile terminal of any one of claims 8 to 11, further comprising a memory unit to store the meeting distance and the acquired meeting information.

13. The mobile terminal of any one of claims 8 to 12, wherein the controller controls the display unit to display meeting information of a plurality of meetings in a list, and arranges the meeting information in a group according to at least one of identification data, location data, and time data.

14. The mobile terminal of any one of claims 8 to 13, further comprising a global positioning system (GPS) reception unit to determine the present location of the mobile terminal.
